(19) Europäisches Patentamt
European Patent Office
Office européen des brevets

(11) Numéro de publication : **0 360 709 B1**

(12) # FASCICULE DE BREVET EUROPEEN

(45) Date de publication du fascicule du brevet : **16.12.92 Bulletin 92/51**

(51) Int. Cl.$^5$ : **C08G 18/34,** C08G 18/77, C08G 73/14, C08G 77/42

(21) Numéro de dépôt : **89420349.6**

(22) Date de dépôt : **14.09.89**

(54) **Procédé de préparation de copoly (imide-amide) thermostables comprenant des groupements diorganopolysiloxane.**

(30) Priorité : **19.09.88 FR 8812416**

(43) Date de publication de la demande : **28.03.90 Bulletin 90/13**

(45) Mention de la délivrance du brevet : **16.12.92 Bulletin 92/51**

(84) Etats contractants désignés : **CH DE ES FR GB IT LI NL SE**

(56) Documents cités :
**EP-A- 0 196 939**
**DE-A- 1 906 259**

(73) Titulaire : **CIBA-GEIGY AG**
**Klybeckstrasse 141**
**CH-4002 Basel (CH)**

(72) Inventeur : **Michaud, Philippe**
**19, rue du Tonkin**
**F-69100 Villeurbanne (FR)**
Inventeur : **Prud'homme, Christian**
**19, rue du Commandant Faurax**
**F-69006 Lyon (FR)**

EP 0 360 709 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention a pour objet un nouveau procédé de préparation de copolymères thermostables comprenant dans leur structure des unités de récurrence formées de groupements imide-amide et diorganopolysiloxane.

L'association de groupements imide-amide et diorganopolysiloxane a été avantageusement employée dans la préparation de polymères utilisables dans les applications de revêtement isolant pour lesquelles le revêtement doit possèder une excellente stabilité thermique. Un art antérieur représentatif qui décrit des polymères de cette nature consiste dans les brevets américains US-A-3.723.385 et US-A-4.395.527. Dans ces documents, on propose des poly(imide-amide) comprenant des groupements diorganopolysiloxane qui sont le produit d'une réaction de condensation en solution entre une diamine biprimaire à groupement diorganopolysiloxane, prise seule ou en mélange avec une autre diamine organique biprimaire, et un monoanhydride d'acide tricarboxylique. Toutefois, la mise en oeuvre d'un pareil procédé présente l'inconvénient, commun à la plupart des procédés où l'on fait réagir un réactif aminé avec un composé organique comportant une fonction anhydride d'acide carboxylique, qui consiste dans la nécessité de réaliser la déshydratation cyclisante des acides polyamiques formés intermédiairement ; en effet, cette réaction étant équilibrée, il faut éliminer l'eau libérée et cette opération ne peut généralement pas être effectuée de manière complète en solution.

Il a maintenant été trouvé, et c'est ce qui constitue l'objet de la présente invention, un procédé amélioré de préparation de copolymères thermostables comprenant dans leur structure des unités de récurrence formées de groupements imide-amide et diorganopolysiloxane qui ne présente pas les inconvénients mentionnés ci-avant pour le procédé de l'art antérieur. Dans ce procédé amélioré, la cyclisation et la polymérisation simultanée conduisant à la formation directe de poly(imide-amide) à groupements diorganopolysiloxane s'accompagnent d'un dégagement de dioxyde de carbone, produit très volatil, qui ne risque pas d'altérer le polymère déjà formé.

Plus précisément, la présente invention concerne un procédé amélioré de préparation de copoly(imide-amide) comprenant des groupements diorganopolysiloxane, caractérisé en ce que l'on fait réagir directement, en opérant à une température comprise entre 50°C et 210°C et en présence d'un solvant organique ou d'un mélange de solvants organiques, les réactifs (i), (2i) et (3i) suivants :

- (i) est un diisocyanate de formule :

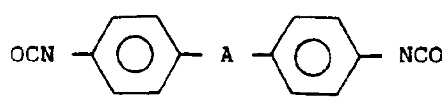

(I)

dans laquelle le symbole A représente un lien valentiel simple ou un groupement :

$-CH_2-$ ; 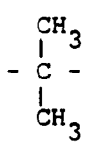 ; $-O-$ ; $-S-$ ; 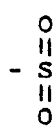 ; 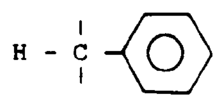 ; 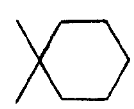 ;

- (2i) est un monoanhydride d'acide tricarboxylique de formule :

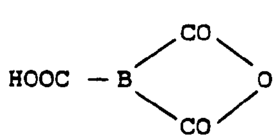

(II)

dans laquelle B représente un radical trivalent consistant dans un radical aromatique substitué ou non ou dans deux de ces radicaux reliés entre eux par un lien valentiel simple ou un groupement :

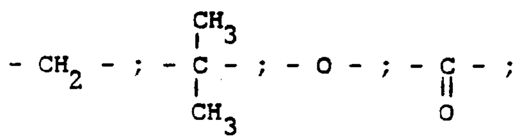

- et (3i) est un diisocyanate à groupement diorganopolysiloxane de formule :

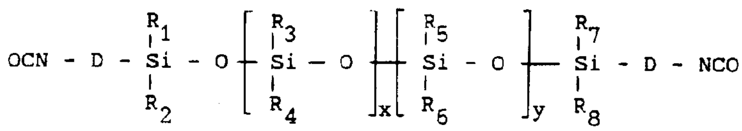 (III)

dans laquelle :

* D représente un radical divalent ayant pour formule :

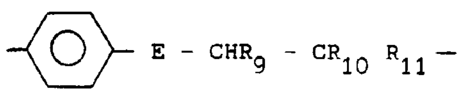 (IV)

dans laquelle : c'est le cycle benzénique qui est toujours relié à la fonction isocyanate NCO ; le symbole E représente un lien valentiel simple, un groupement diorganosilyle de formule :

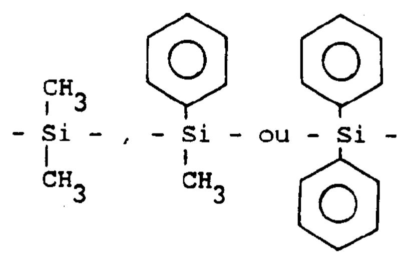

ou un groupement divalent constitué par un radical alkylène ayant de 1 à 6 atomes de carbones qui est relié d'un côté au cycle benzénique par un lien valentiel simple, un atome d'oxygène, un atome de soufre, une fonction ester ou une fonction amide et de l'autre côté au groupement $CHR_9-CR_{10}R_{11}$ par un lien valentiel simple ou par un groupement diorganosilyle de formule :

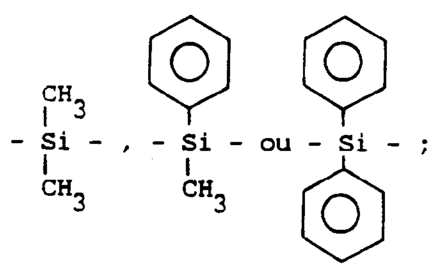

les symboles $R_9$, $R_{10}$ et $R_{11}$, identiques ou différents, représentent chacun un atome d'hydrogène ou un radical alkyle linéaire ou ramifié ayant de 1 à 6 atomes de carbone ;

* $R_1$, $R_2$, $R_3$, $R_4$, $R_5$, $R_6$, $R_7$, et $R_8$ identiques ou différents, représentent chacun un radical hydrocarboné monovalent choisi parmi : les radicaux alkyles, linéaires ou ramifiés, ayant de 1 à 12 atomes de carbone, ces radicaux pouvant être substitués par un ou plusieurs atomes de chlore, de brome ou de fluor

ou par un groupement - CN ; un radical phényle éventuellement substitué par un ou plusieurs radicaux alkyles et/ou alkoxy ayant de 1 à 4 atomes de carbone ou par un ou plusieurs atomes de chlore ;

∗ les symboles x et y représentent des nombres, identiques ou différents, entiers ou fractionnaires, dont la somme se situe dans l'intervalle allant de 0 à 100 ;

- les proportions respectives des réactifs (i) et (2i) étant choisies de façon que le rapport r :

$$\frac{\text{nombre de moles d'anhydride (2i)}}{\text{nombre de moles de diisocyanate (i)}}$$

se situe dans l'intervalle allant de 1,01/1 à 3/1 ;

- et la proportion du réactif (3i) étant choisie de façon que le rapport r' :

$$\frac{\text{nombre de moles de diisocyanate siloxane (3i)}}{\text{nombre de moles d'anhydride (2i)} - \text{nombre de moles de diisocyanate (i)}}$$

soit égal à 1.

Les copoly(imide-amide) obtenus à l'issue du procédé selon la présente invention comprennent dans leur structure des unités de récurrence pouvant être représentées par la formule générale suivante :

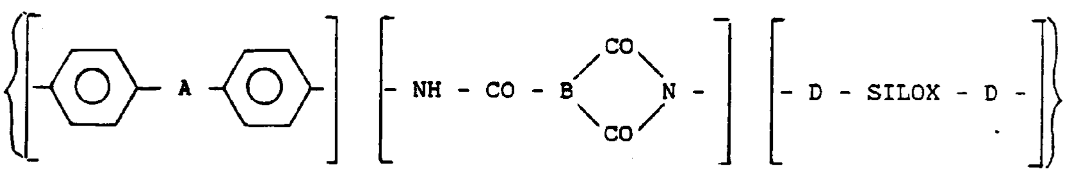 (V)

dans laquelle les symboles A, B et D ont les significations données ci-avant et l'expression SILOX représente le groupement diorganopolysiloxane

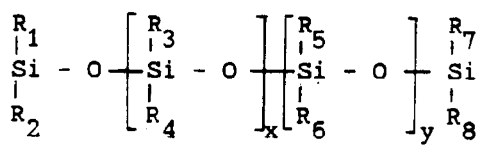

entrant dans la constitution du diisocyanate siloxane de formule (III). La formule (V) a été généralisée et il doit être entendu qu'elle englobe les unités de récurrence dans lesquelles le reste issu du diisocyanate aromatique (i) de formule (I) ou le reste issu du diisocyanate siloxane (3i) de formule (III) est attaché au reste issu de l'anhydride (2i) de formule (II) soit par une fonction amide, soit par une fonction imide.

A titre d'exemples spécifiques de diisocyante (i) de formule (I) qui conviennent bien, on peut citer en particulier :

- le diisocyanato-4,4'-diphényl-2,2-propane,
- le diisocyanato-4,4'-diphénylméthane,
- le diisocyanato-4,4'-biphényle,
- le diisocyanato-4,4'-diphénylsulfure,
- le diisocyanato-4,4'-diphénylsulfone,
- le diisocyanato-4,4'-diphényléther,
- le diisocyanato-4,4'-diphényl-1,1-cyclohexane.

On utilise de préférence, pour la mise en oeuvre de la présente invention, le diisocyanato-4,4'-diphénylméthane et le diisocyanato-4,4'-diphényléther.

A titre d'exemples spécifiques de monoanhydrides d'acides tricarboxyliques (2i) de formule (II) qui conviennent bien, on peut citer en particulier :

- le monoanhydride d'acide trimellique,
- le monoanhydride-2,3 d'acide naphtalène-tricarboxylique-2,3,6,
- le monoanhydride-1,8 d'acide naphtalène-tricarboxylique-1,8,4,
- le monoanhydride-1,2 d'acide naphtalène-tricarboxylique-1,2,5,
- le monoanhydride-3,4 d'acide diphényl-tricarboxylique-3,4,4',
- le monoanhydride-3,4 d'acide diphényl-éther-tricarboxylique-3,4,4',
- le monoanhydride-3,4 d'acide benzophénone-tricarboxylique-3,4,4',
- le monoanhydride-3,4 d'acide diphényl-isopropylidène-tricarboxylique-3,4,3'.

On utilise de préférence, pour la mise en oeuvre de la présente invention, le monoanhydride d'acide trimellique.

A propos des diisocyanates siloxane (3i) de formule (III), lorsque x et/ou y sont supérieurs à 1, on est en présence d'un composé à structure polymère et on a rarement un seul composé, mais le plus souvent un mélange de composés de même structure chimique, qui diffèrent par le nombre d'unités récurrentes de leur molécule ; cela conduit à une valeur moyenne de x et/ou y qui peut être entière ou fractionnaire.

Comme diisocyanates siloxane qui conviennent, on peut citer ceux qui répondent à la formule (III) dans laquelle :

1.

D = 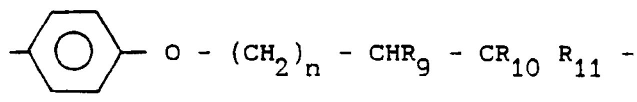

ou

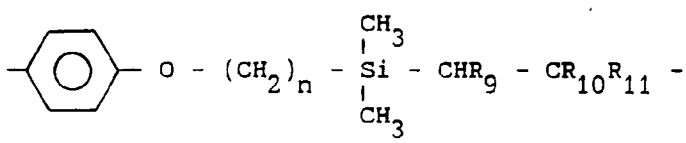

avec n = 1,2 ou 3 et $R_9 = R_{10} = R_{11}$ = un atome d'hydrogène ou un radical alkyle linéaire ayant de 1 à 3 atomes de carbone $R_1 = R_2 = R_3 = R_4 = R_5 = R_6 = R_7 = R_8$ = radical alkyle linéaire ayant de 1 à 3 atomes de carbone ;

x + y se situe dans l'intervalle allant de 0 à 100 et, de préférence, de 4 à 70 ;

2. D a la signification donnée ci-avant au point 1. $R_1 = R_2 = R_3 = R_4 = R_7 = R_8$ = radical alkyle linéaire ayant de 1 à 3 atomes de carbone ; $R_5 = R_6$ = radical phényle ; x + y se situe dans l'intervalle allant de 0 à 100 et, de préférence, de 4 à 70 ;

3. D a la signification donnée ci-avant au point 1. ; $R_1 = R_2 = R_7 = R_8$ = radical alkyle linéaire ayant de 1 à 3 atomes de carbone ; $R_3 = R_4 = R_5 = R_5$ = radical phényle ; x + y se situe dans l'intervalle allant de 0 à 100 et, de préférence, de 4 à 70 ;

4. D a la signification donnée ci-avant au point 1. ; $R_1 = R_2 = R_3 = R_5 = R_7 = R_5$ = radical alkyle linéaire ayant de 1 à 3 atomes de carbone ; $R_4 = R_5$ = radical phényle ; x + y se situe dans l'intervalle allant de 0 à 100 et, de préférence, de 4 à 70 ;

5. D a la signification donnée ci-avant au point 1. ; $R_1 = R_3 = R_5 = R_7$ = radical alkyle linéaire ayant de 1 à 3 atomes de carbone ; $R_2 = R_4 = R_6 = R_5$ = radical phényle ; x + y se situe dans l'intervalle allant de 0 à 100 et, de préférence, de 4 à 70.

Comme exemples spécifiques de diisocyanates siloxane qui conviennent, on citera notamment :

6.

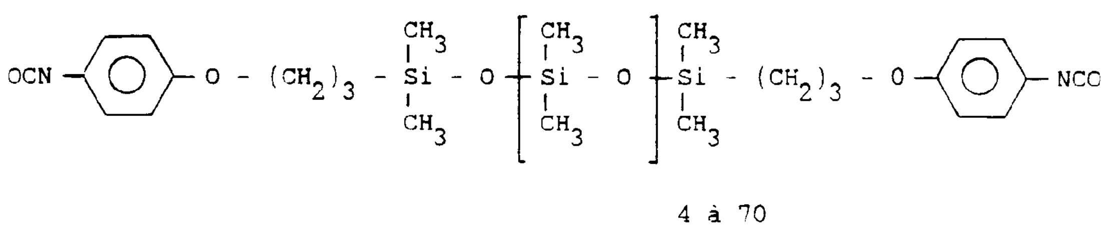

7.

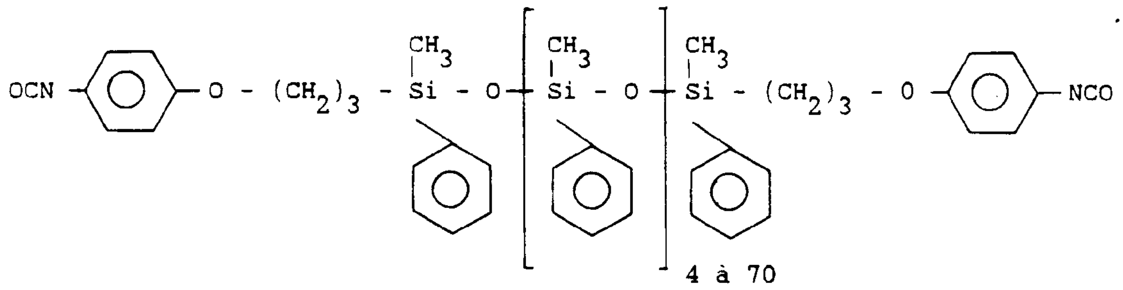

8.

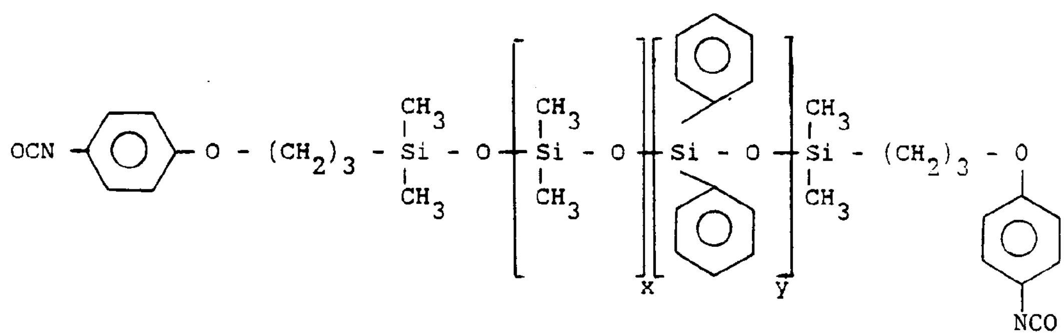

avec x + y = 4 à 70

9.

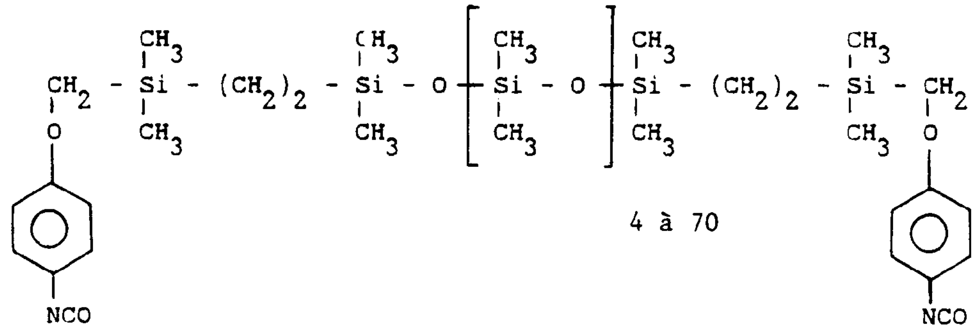

10.

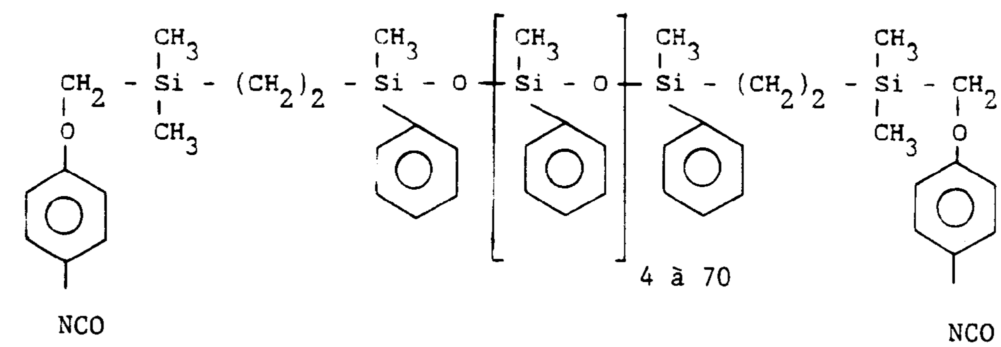

11.

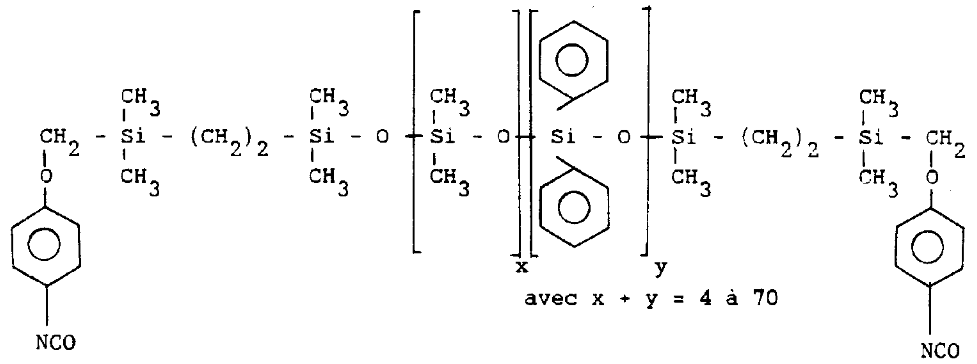

avec x + y = 4 à 70

On utilise de préférence comme diisocyanates siloxane (3i) de formule (III), ceux où le groupement diorganopolysiloxane renferme à la fois des liaisons Si-alkyle (ou Si-alkyle substitué) et des liaisons Si-phényle (ou Si-phényle substitué). Les composés de ce type qui conviennent particulièrement bien sont ceux appartenant aux groupes suivants, classés par ordre croissant de préférence :

- composés précités n° 2, 3, 4 et 5 ;
- composés précités n° 7, 8, 10 et 11.

Les diisocyanates siloxane (3i) de formule (III) sont des composés qui sont bien connus dans l'art antérieur. Ils sont par exemple décrits dans le brevet américain US-A-4.518.758.

La réaction permettant de préparer les poly(imide-amide) selon la présente invention est conduite en milieu homogène par addition aux réactifs (i), (2i) et (3i) d'un solvant ou mélange de solvants communs aux réactifs et au produit formé. Les solvants qui conviennent bien sont les solvants polaires, en particulier le N,N-diméthylacétamide, le N,N-diméthylformamide, la N-méthyl-pyrrolidone-2, le diméthyl-sulfoxyde, la tétraméthyl-1,1,3,3 urée, la diméthyl-1,3 urée, la diméthyl-1,3 imidazolidone-2, la diméthyl-1,3 tétrahydro-3,4,5,6 pyrimidone-2 et un mélange de ces solvants ; ils doivent de plus être parfaitement anhydres.

De manière préférentielle, les proportions des réactifs (i) et (2i) sont choisie de façon que le rapport r :

$$\frac{\text{nombre de moles d'anhydride (2i)}}{\text{nombre de moles de diisocyanate (i)}}$$

se situe dans l'intervalle allant de 1,05/1 à 2.

Pratiquement, on dissout les réactifs de départ, qui sont engagés ensemble, dans le (ou les) solvant(s) en opérant de préférence à température ambiante (de l'ordre de 20°C à 30°C), puis on élève la température de la solution obtenue à la température de réaction désirée comprise entre 50°C et 210°C, soit directement, soit de manière progressive, en opérant généralement sous la pression atmosphérique pendant une durée qui va varier dans une large mesure en fonction des conditions précises de température adoptées. De manière très préférentielle, le processus opératoire consiste à porter la solution réactionnelle à une température comprise, au début de réaction, entre 50°C et 110°C puis à élever la température en cours de réaction, de 50°C à 110°C au début de la réaction jusqu'à 180-210°C, en suivant un programme avec une première montée en température de l'ordre de +60°C à +90°C au bout d'une première unité de temps variant de 30 minutes à 2 heures, suivie d'une seconde montée en température de l'ordre de +10°C à +100°C au bout d'une seconde unité de temps variant de 3 heures à 5 heures. Une fois la température maximale désirée (entre 180°C et 210°C) atteinte, on pratique encore un palier de chauffage à cette température pendant une durée allant de 20 minutes à 2 heures.

La réaction permettant de préparer les poly(imide-amide) selon la présente invention peut être conduite au besoin en présence d'un catalyseur approprié. Les catalyseurs utilisables le cas échéant sont des composés organiques ne comportant pas de groupements fonctionnels à hydrogène mobile susceptible de réagir avec les groupes isocyanates. Conviennent bien dans cette optique notamment les amines tertiaires appartenant à la famille des composés mono- ou polycycliques ayant au moins un atome d'azote tertiaire intra- et/ou extracyclique ; à titre d'exemples spécifiques de catalyseurs utilisables, on peut citer en particulier : le diazo-1,4 bicyclo 2,2,2 octane, les N,N'-dialkylpipérazines, la N-alkylmorpholine, la N-alkylpipéridine dans lesquelles le radical alkyle est un radical méthyle et/ou éthyle. On peut également envisager d'utiliser comme catalyseurs des sels de métaux ; à titre d'exemples spécifiques de pareils catalyseurs, on peut citer en particulier : le dilaurate de dibutylétain, l'acétylacétonate de cobalt.

La quantité de catalyseur, quand on choisit d'un utiliser un, représente généralement de 0,1 à 2 % du poids total des réactifs (i), (2i) et (3i) mis en solution.

En fin de réaction, le copolymère est obtenu sous forme de solution. On peut le faire précipiter par addition dans le milieu réactionnel d'un non-solvant ou d'un mélange de non-solvants et séparer le polymère précipité du milieu réactionnel. Les non-solvants convenables sont par exemple l'eau, l'acétone, le tétrahydrofuranne, le toluène ou tout autre solvant ne solubilisant pas le polymère souhaité. Il est aussi possible d'obtenir le polymère par évaporation du (ou des) solvant(s) du milieu réactionnel dans une étuve ventilée.

Les poly(imide-amide) qui ont été préparés, sous forme de solution, se prêtent bien à la fabrication notamment de fibres, des vernis isolants et cela soit lors de l'évaporation du solvant, soit ultérieurement. Sous forme précipitée, ces polymères peuvent servir pour la fabrication notamment de produit conformés en utilisant les techniques du moulage par injection ou par compression.

Les exemples qui suivent sont donnés à titre illustratif, mais non limitatif.

EXEMPLE 1:

1. Exemple de mise en oeuvre de la présente invention :

Dans un réacteur en verre muni d'un agitateur central de type ancre et d'un réfrigérant ascendant, dans lequel on établit une légère surpression d'azote sec, on introduit à température ambiante (23°C) successivement :

- 21,6 g (0,1125 mole) de monoanhydride d'acide trimellique,
- 26,4 g (0,1048 mole) de diisocyanato-4,4′-diphényléther,
- 11,7 g (0,0077 mole) du diisocyanate à groupement diorganopolysiloxane qui est décrite dans le paragraphe 2 ci-après, et
- 140 g de N-méthyl-pyrrolidone-2.

Le mélange réactionnel est agité pendant 15 minutes à température ambiante (23°C), puis il est chauffé à 100°C. L'agitation est poursuivie en suivant le protocole de montée en température ci-après défini :

- 1 h 30 à 100°C, puis chauffage de 100°C à 185°C ;
- 4 h à 185°C, puis chauffage de 185°C à 198°C ; et
- 1 h à 198°C.

Le collodion ou solution du copoly(imide-amide) ainsi obtenu est une masse liquide de couleur brune ayant un poids de 190 g (contenant 50 g de polymère). Par analyse infra-rouge, on note la présence dans le collodion de bandes C = O imide à $\nu$ = 1710-1770 $cm^{-1}$ et l'absence de bande C = O anhydride à $\nu$ = 1850 $cm^{-1}$ et isocyanate à $\nu$ = 2270 $cm^{-1}$.

Le copoly(imide-amide) est précipité par addition d'eau dans le collodion en introduisant, sous vive agitation, 100 g de collodion dans 1000 $cm^3$ d'eau. Le précipité obtenu est filtré, lavé avec 250 $cm^3$ d'eau, puis il est séché à 100°C pendant 12 heures sous une pression réduite de $53,2.10^2$ Pa. Le produit ainsi obtenu est une poudre jaune pâle ayant un poids de 26 g.

Le copoly(imide-amide) qui a été préparé dans cet exemple comprend dans sa structure des unités de récurrence représentées par la formule générale suivante :

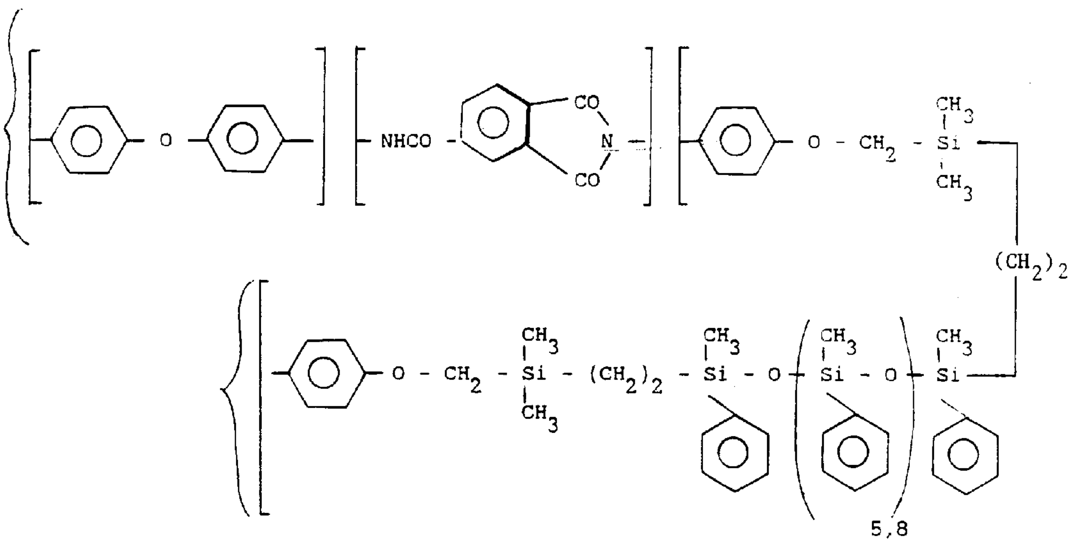

Sa masse moléculaire, déterminée par chromatographie par perméation de gel (solvant : N-méthyl pyrrolidone-2 ; température : 80°C) est de $M_w$ = 44000.

Le rendement en poids en copoly(imide-amide) souhaité est de 99,8 %.

2. Description du procédé de préparation du diisocyanate siloxane utilisé :

Ce diisocyanate présente la formule suivante :

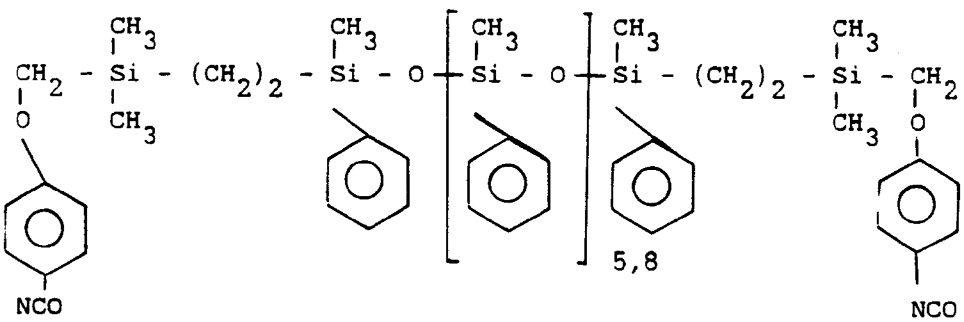

Dans un réacteur en verre muni d'une agitation centrale, d'une ampoule de coulée et d'un réfrigérant ascendant dans lequel on établit une légère surpression d'azote sec, on charge :

- 40 $cm^3$ de toluène ;
- 38,7 g (0,166 mole) d'un composé isocyanate de formule :

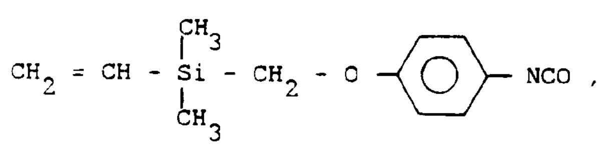

et

- un catalyseur ; ce dernier est le catalyseur de Karsted (complexe à base de platine élémentaire et de ligands divinyl-1,3 tétraméthyl-1,1,3,3 disiloxane) : il est en solution dans le toluène (concentration de 0,06

% en poids) et on introduit 2,2 $cm^3$ de cette solution de catalyseur.

Ce mélange est agité et porté à 70°C à l'aide d'un bain d'huile. Dans le réacteur, on coule ensuite progressivement, en 35 minutes, 75 g (0,072 mole) d'un alpha,oméga-bis(hydrogéno)polysiloxane de formule :

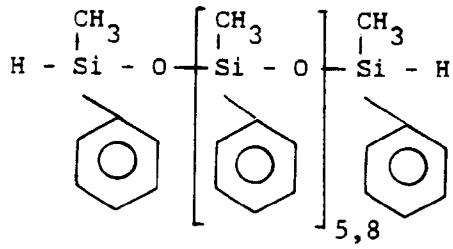

ayant une masse moléculaire moyenne de l'ordre de 1047 g, en solution dans 40 $cm^3$ de toluène.

Le mélange ainsi obtenu est ensuite agité et chauffé à 90°C pendant 4 heures. Puis, au bout de ce temps, on procède à la dévolatilisation de la masse réactionnelle pendant 45 minutes à 120°C sous une pression réduite de $0{,}67.10^2$ Pa. On obtient ainsi un composé conforme à la formule donnée ci-avant, dont la masse moléculaire moyenne est de 1513 g.

EXEMPLE 2 :

Dans le réacteur utilisé à l'exemple 1, on introduit successivement à température ambiante (23°C) :

- 15,1 g (0,0786 mole) de monoanhydride d'acide trimellique,
- 17,5 g (0,0694 mole) de diisocyanato-4,4'-diphényléther,
- 14 g (0,0092 mole) de diisocyanate à groupement diorganopolysiloxane qui est décrite ci-avant dans l'exemple 1, et
- 112 g de N-méthyl-pyrrolidone-2.

Le mélange réactionnel est agité pendant 15 minutes à température ambiante, puis il est chauffé à 100°C. L'agitation est poursuivie en suivant le protocole de montée en température ci-après défini :

- 1 h 30 à 100°C, puis chauffage de 100°C à 185°C ;
- 4 h à 185°C, puis chauffage de 185°C à 198°C et ;
- 30 mn à 198°C.

Le collodion ou solution du copoly(imide-amide) ainsi obtenu est une masse liquide de couleur brune ayant un poids de 134 g (contenant 22 g de polymère). Par spectrométrie infra-rouge on note, comme dans l'exemple 1, la présence dans le collodion de bandes C = O imide à $\nu$ = 1710 -1770 $cm^{-1}$ et l'absence de bande C = O anhydride à $\nu$ = 1850 $cm^{-1}$ et isocyanate à $\nu$ = 2270 $cm^{-1}$. On obtient ainsi un copolymère conforme à la structure donnée ci-avant dans l'exemple 1, dont la masse moléculaire déterminée par chromatographie par perméation de gel est de $M_w$ = 35000.

Le rendement en poids en copoly(imide-amide) est de 99,6 %.

## Revendications

1. Procédé de préparation de copoly(imide-amide) comprenant des groupements diorganopolysiloxane, caractérisé en ce que l'on fait réagir directement, en opérant à une température comprise entre 50°C et 210°C et en présence d'un solvant organique ou d'un mélange de solvants organiques, les réactifs (i), (2i) et (3i) suivants :

   - (i) est un diisocyanate de formule :

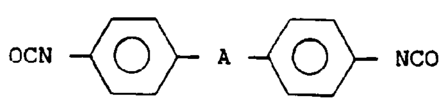

(I)

dans laquelle le symbole A représente un lien valentiel simple ou un groupement :

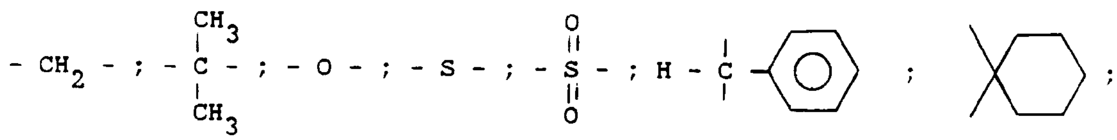

- (2i) est un monoanhydride d'acide tricarboxylique de formule :

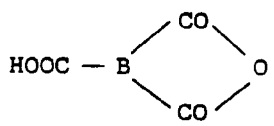

(II)

dans laquelle B représente un radical trivalent consistant dans un radical aromatique substitué ou non ou dans deux de ces radicaux reliés entre eux par un lien valentiel simple ou un groupement :

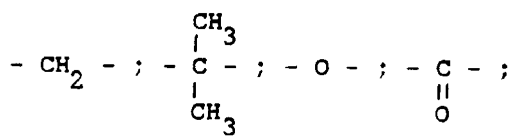

- et (3i) est un diisocyanate à groupement diorganopolysiloxane de formule :

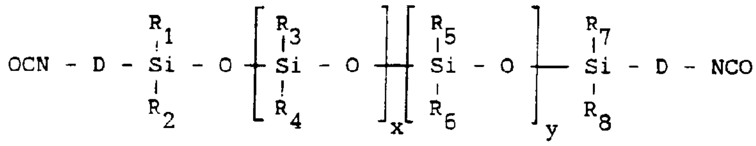

(III)

dans laquelle :

∗ D représente un radical divalent ayant pour formule :

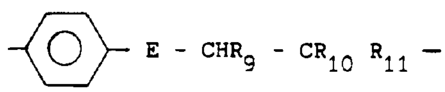

(IV)

dans laquelle : c'est le cycle benzénique qui est toujours relié à la fonction isocyanate NCO ; le symbole E représente un lien valentiel simple, un groupement diorganosilyle de formule :

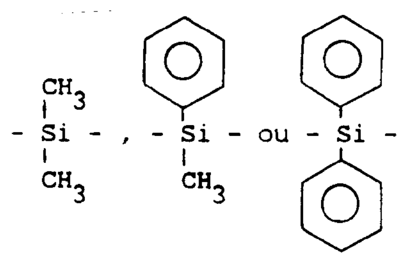

ou un groupement divalent constitué par un radical alkylène ayant de 1 à 6 atomes de carbones qui est relié d'un côté au cycle benzénique par un lien valentiel simple, un atome d'oxygène, un atome de soufre, une fonction ester ou une fonction amide et de l'autre côté au groupement $CHR_9$-$CR_{10}R_{11}$ par un lien valentiel simple ou par un groupement diorganosilyle de formule :

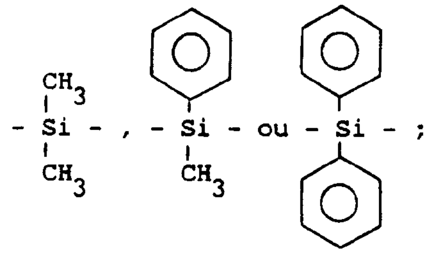

, ou ;

les symboles $R_9$, $R_{10}$ et $R_{11}$, identiques ou différents, représentent chacun un atome d'hydrogène ou un radical alkyle linéaire ou ramifié ayant de 1 à 6 atomes de carbone ;

* $R_1$, $R_2$, $R_3$, $R_4$, $R_5$, $R_5$, $R_7$, et $R_8$ identiques ou différents, représentent chacun un radical hydrocarboné monovalent choisi parmi : les radicaux alkyles, linéaires ou ramifiés, ayant de 1 à 12 atomes de carbone, ces radicaux pouvant être substitués par un ou plusieurs atomes de chlore, de brome ou de fluor ou par un groupement - CN ; un radical phényle éventuellement substitué par un ou plusieurs radicaux alkyles et/ou alkoxy ayant de 1 à 4 atomes de carbone ou par un ou plusieurs atomes de chlore ;

* les symboles x et y représentent des nombres, identiques ou différents, entiers ou fractionnaires, dont la somme se situe dans l'intervalle allant de 0 à 100 ;

- les proportions respectives des réactifs (i) et (2i) étant choisies de façon que le rapport r :

$$\frac{\text{nombre de moles d'anhydride (2i)}}{\text{nombre de moles de diisocyanate (i)}}$$

se situe dans l'intervalle allant de 1,01/1 à 3/1 ;

- et la proportion du réactif (3i) étant choisie de façon que le rapport r' :

$$\frac{\text{nombre de moles de diisocyanate siloxane (3i)}}{\text{nombre de moles d'anhydride (2i)} - \text{nombre de moles de diisocyanate (i)}}$$

soit égal à 1.

**2.** Procédé selon la revendication 1, caractérisé en ce que le diisocyanate (i) de formule (I) est choisi dans le groupe formé par :

- le diisocyanato-4,4'-diphényl-2,2-propane,
- le diisocyanato-4,4'-diphénylméthane,
- le diisocyanato-4,4'-biphényle,
- le diisocyanato-4,4'-diphénylsulfure,
- le diisocyanato-4,4'-diphénylsulfone,
- le diisocyanato-4,4'-diphényléther,
- le diisocyanato-4,4'-diphényl-1,1-cyclohexane.

**3.** Procédé selon l'une quelconque des revendications 1 et 2, caractérisé en ce que le monoanhydride d'acide tricarboxylique (2i) de formule (II) est choisi dans le groupe formé par :

- le monoanhydride d'acide trimellique,
- le monoanhydride-2,3 d'acide naphtalène-tricarboxylique-2,3,6,
- le monoanhydride-1,8 d'acide naphtalène-tricarboxylique-1,8,4,
- le monoanhydride-1,2 d'acide naphtalène-tricarboxylique-1,2,5,
- le monoanhydride-3,4 d'acide diphényl-tricarboxylique-3,4,4',
- le monoanhydride-3,4 d'acide diphényl-éther-tricarboxylique-3,4,4',
- le monoanhydride-3,4 d'acide benzophénone-tricarboxylique-3,4,4',
- le monoanhydride-3,4 d'acide diphényl-isopropylidène-tricarboxylique-3,4,3'.

**4.** Procédé selon l'une quelconque des revendications 1 à 3, caractérisé en ce que l'on utilise comme diisocyanate siloxane (3i) de formule (III) ceux où le groupement diorganopolysiloxane renferme à la fois des liaisons Si-alkyle (ou Si-alkyle substitué) et des liaisons Si-phényle (ou Si-phényle substitué).

**5.** Procédé selon la revendication 4, caractérisé en ce que les diisocyanates siloxane (3i) mis en oeuvre sont ceux qui répondent à la formule (III) dans laquelle :

2.

D = 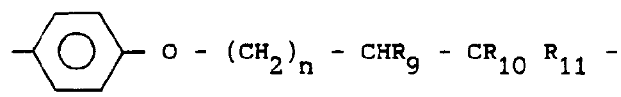

ou

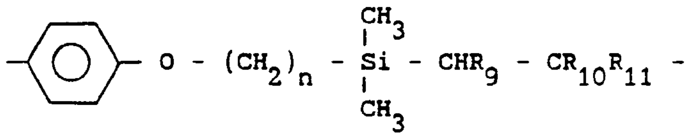

avec n = 1,2 ou 3 et $R_9 = R_{10} = R_{11}$ = un atome d'hydrogène ou un radical alkyle linéaire ayant de 1 à 3 atomes de carbone ; $R_1 = R_2 = R_3 = R_4 = R_7 = R_8$ = radical alkyle linéaire ayant de 1 à 3 atomes de carbone ; $R_5 = R_6$ = radical phényle ; x + y se situe dans l'intervalle allant de 0 à 100 et, de préférence, de 4 à 70 ;

3. D a la signification donnée ci-avant au point 2. ; $R_1 = R_2 = R_7 = R_6$ = radical alkyle linéaire ayant de 1 à 3 atomes de carbone ; $R_3 = R_4 = R_6 = R_6$ = radical phényle ; x + y se situe dans l'intervalle allant de 0 à 100 et, de préférence, de 4 à 70 ;

4. D a la signification donnée ci-avant au point 2. ; $R_1 = R_2 = R_3 = R_6 = R_7 = R_6$ = radical alkyle linéaire ayant de 1 à 3 atomes de carbone ; $R_4 = R_6$ = radical phényle ; x + y se situe dans l'intervalle allant de 0 à 100 et, de préférence, de 4 à 70 ;

5. D a la signification donnée ci-avant au point 2. ; $R_1 = R_3 = R_6 = R_7$ = radical alkyle linéaire ayant de 1 à 3 atomes de carbone $R_2 = R_4 = R_6 = R_6$ = radical phényle ; x + y se situe dans l'intervalle allant de 0 à 100 et, de préférence, de 4 à 70.

6. Procédé de préparation selon l'une quelconque des revendications 1 à 5, caractérisé en ce que l'on dissout les réactifs de départ (i), (2i) et (3i), qui sont engagés ensemble, dans un solvant organique ou dans un mélange de solvants organiques en opérant à température ambiante de 20°C à 30°C, puis on élève la température de la solution obtenue à la température de réaction désirée comprise entre 50°C et 210°C, soit directement, soit de manière progressive, en opérant sous la pression atmosphérique pendant une durée qui va varier dans une large mesure en fonction des conditions précises de température adoptées.

7. Procédé de préparation selon l'une quelconque des revendications 1 à 6, caractérisé en ce que les solvants mis en oeuvre sont pris dans le groupe formé par : le N,N-diméthyl-acétamide, le N,N-diméthylformamide, la N-méthyl-pyrrolidone-2, le diméthyl-sulfoxyde, la tétraméthyl-1,1,3,3, urée, la diméthyl-1,3 urée, la diméthyl-1,3 imidazolidone-2, le diméthyl-1,3 tétrahydro-3,4,5,6 pyrimidone-2 et un mélange de ces solvants.

## Patentansprüche

1. Verfahren zur Herstellung von Copoly-(imid-amid) mit Diorganopolysiloxangruppen, dadurch gekennzeichnet, daß man bei einer Temperatur von 50°C bis 210°C und in Gegenwart eines organischen Lösungsmittels oder eines Gemisches organischer Lösungsmittel die folgenden Reaktanten (i), (2i) und (3i) direkt miteinander umsetzt:
   - (i) ein Diisocyanat der Formel

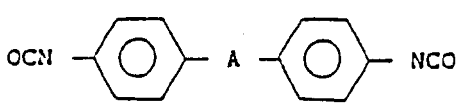

(I)

worin A eine Einfachbindung oder eine Gruppe

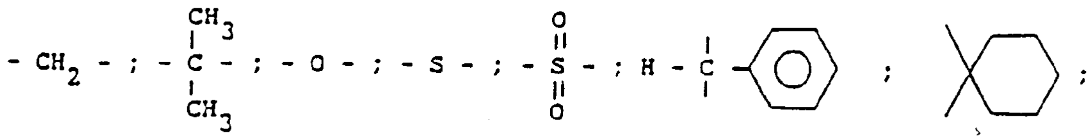

bedeutet;
- (2i) ein Tricarbonsäuremonoanhydrid der Formel

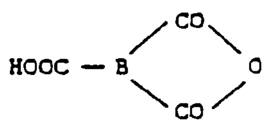

(II)

worin B einen dreiwertigen Rest bedeutet, der aus einem substituierten oder unsubstituierten aromatischen Rest oder aus zwei dieser Reste besteht, die miteinander über eine Einfachbindung oder eine Gruppe

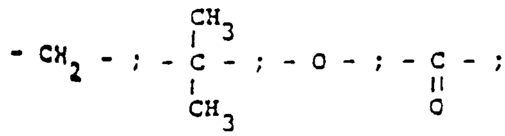

verbunden sind;
- und (3i) ein Diisocyanat mit diorganopolysiloxangruppen der Formel

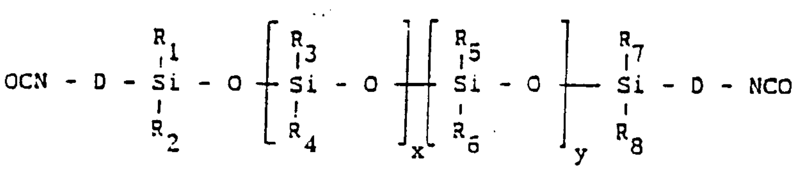

(III)

worin
- D einen zweiwertigen Rest der Formel

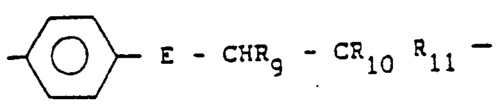

(IV)

bedeutet, worin der Benzolring stets an die Isocyanatfunktion NCO gebunden ist; E eine Einfachbindung, eine Diorganosilylgruppe der Formel

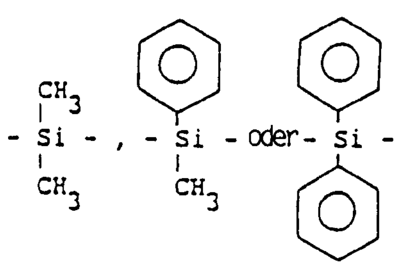

oder eine zweiwertige Gruppe, bestehend aus einer Alkylengruppe mit 1 bis 6 Kohlenstoffatomen, bedeutet,die auf der einen Seite an den Benzolring über eine Einfachbindung, ein Sauerstoffatom, ein

Schwefelatom, eine Esterfunktion oder eine Amidfunktion und auf der anderen Seite an die Gruppe $CHR_9$-$CR_{10}R_{11}$ über eine Einfachbindung der über eine Diorganosilylgruppe der Formel

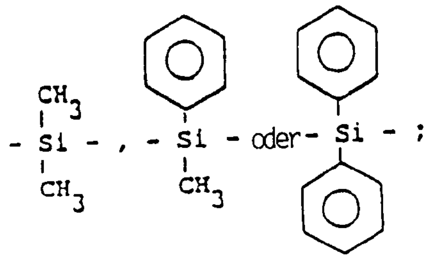

oder

gebunden ist,
wobei $R_9$, $R_{10}$ und $R_{11}$, die gleich oder verschieden sind, jeweils ein Wasserstoffatom oder einen linearen oder verzweigten Alkylrest mit 1 bis 6 Kohlenstoffatomen bedeuten;
- $R_1$, $R_2$, $R_3$, $R_4$, $R_5$, $R_5$, $R_7$ und $R_8$, die gleich oder verschieden sind, jeweils einen einwertigen Kohlenwasserstoffrest bedeuten, der ausgewählt ist aus: linearen oder verzweigten Alkylresten mit 1 bis 12 Kohlenstoffatomen, die mit einem oder mehreren Chlor-, Brom- oder Fluoratomen oder mit einer CN-Gruppe substituiert sein können; einem Phenylrest, der gegebenenfalls mit einem oder mehreren Alkyl- und/oder Alkoxyresten mit 1 bis 4 Kohlenstoffatomen oder mit einem oder mehreren Chloratomen substituiert ist;
- x und y ganze oder Bruchzahlen bedeuten, die gleich oder verschieden sind, deren Summe im Bereich von 0 bis 100 liegt;
- wobei die jeweilige Menge der Reaktanten (i) und (2i) derart gewählt ist, daß das Verhältnis r:

$$\frac{\text{Anzahl der Mole Anhydrid (2i)}}{\text{Anzahl der Mole Diisocyanat (i)}}$$

im Bereich von 1,01/1 bis 3/1 liegt;
- und wobei die Menge des Reaktanten (3i) derart gewählt ist, daß das Verhältnis r':

$$\frac{\text{Anzahl der Mole Siloxan – Diisocyanat (3i)}}{\text{Anzahl der Mole Anhydrid (2i) – Anzahl der Mole Diisocyanat (i)}}$$

gleich 1 ist.

**2.** Verfahren gemäß Anspruch 1, dadurch gekennzeichnet, daß das Diisocyanat (i) der Formel (I) ausgewählt ist aus der Gruppe:
4,4'-Diisocyanato-2,2-diphenyl-propan,
4,4'-Diisocyanato-diphenylmethan,
4,4'-Diisocyanato-biphenyl,
4,4'-Diisocyanato-diphenylsulfid,
4,4'-Diisocyanato-diphenylsulfon,
4,4'-Diisocyanato-diphenylether
4,4'-Diisocyanato-1,1-diphenyl-cyclohexan.

**3.** Verfahren gemäß einem der Ansprüche 1 und 2, dadurch gekennzeichnet, daß das Tricarbonsäure-monoanhydrid (2i) der Formel (II) ausgewählt ist aus:
Monoanhydrid der Trimellitsäure,
2,3-Monoanhydrid der 2,3,6-Naphthalin-tricarbonsäure
1,8-Monoanhydrid der 1,8,4-Naphthalin-tricarbonsäure,
1,2-Monoanhydrid der 1,2,5-Naphthalin-tricarbonsäure,
3,4-Monoanhydrid der 3,4,4'-Diphenyl-tricarbonsäure,
3,4-Monoanhydrid der 3,4,4'-Diphenylether-tricarbonsäure,
3,4-Monoanhydrid der 3,4,4'-Benzophenon-tricarbonsäure,
3,4-Monoanhydrid der 3,4,3'-diphenylisopropyliden-tricarbonsäure.

**4.** Verfahren gemäß einem der Ansprüche 1 bis 3, dadurch gekennzeichnet, daß man ein Siloxan-diisocyanat (3i) der Formel (III) verwendet, worin die Diorganopolysiloxangruppe gleichzeitig Si-Alkyl-Bindungen (oder Si-substituiertes Alkyl-Bindungen) und Si-Phenyl-Bindungen (oder Si-substituiertes Phenyl-Bindungen) aufweist.

**5.** Verfahren gemäß Anspruch 4, dadurch gekennzeichnet, daß die eingesetzten Siloxan-diisocyanate (3i) Verbindungen der Formel (III) sind, worin

2.

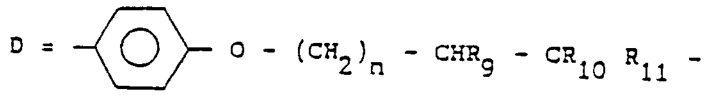

oder

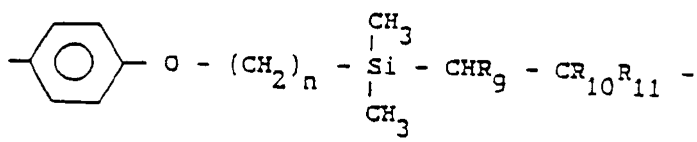

bedeutet,

wobei n = 1,2 oder 3 ist und $R_9 = R_{10} = R_{11}$ ein Wasserstoffatom oder einen linearen Alkylrest mit 1 bis 3 Kohlenstoffatomen darstellen; $R_1 = R_2 = R_3 = R_4 = R_7 = R_8$ einen linearen Alkylrest mit 1 bis 3 Kohlenstoffatomen bedeuten; $R_5 = R_6$ einen Phenylrest bedeuten; x + y im Bereich von 0 bis 100, vorzugsweise 4 bis 70, liegt;

3. D die vorstehend unter Ziffer 2. angegebene Bedeutung besitzt; $R_1 = R_2 = R_7 = R_8$ einen linearen Alkylrest mit 1 bis 3 Kohlenstoffatomen bedeuten; $R_3 = R_4 = R_6 = R_6$ einen Phenylrest bedeuten; x + y im Bereich von 0 bis 100, vorzugsweise 4 bis 70, liegt;

4. D die vorstehend in Ziffer 2. angegebene Bedeutung besitzt; $R_1 = R_2 = R_3 = R_6 = R_7 = R_6$ einen linearen Alkylrest mit 1 bis 3 Kohlenstoffatomen bedeuten; $R_4 = R_6$ einen Phenylrest bedeuten; x + y im Bereich von 0 bis 100, vorzugsweise 4 bis 70, liegt;

5. D die vorstehend in Ziffer 2. genannte Bedeutung besitzt; $R_1 = R_3 = R_5 = R_7$ einen linearen Alkylrest mit 1 bis 3 Kohlenstoffatomen bedeuten; $R_2 = R_4 = R_6 = R_6$ einen Phenylrest bedeuten; x + y im Bereich von 0 bis 100, vorzugsweise 4 bis 70, liegt.

**6.** Herstellungsverfahren gemäß einem der Ansprüche 1 bis 5, dadurch gekennzeichnet, daß man die Ausgangsreaktanten (i), (2i) und (3i), die zusammen eingesetzt werden, bei Raumtemperatur von 20°C bis 30°C in einem organischen Lösungsmittel oder in einem Gemisch organischer Lösungsmittel löst, sodann die Temperatur der erhaltenen Lösung entweder unmittelbar oder nach und nach auf die gewünschte Reaktionstemperatur von 50°C bis 210°C steigert, wobei man bei Atmosphärendruck während einer Zeitdauer arbeitet, die abhängig von den angewandten genauen Temperaturbedingungen in einem weiten Bereich variiert.

**7.** Herstellungsverfahren gemäß einem der Ansprüche 1 bis 6, dadurch gekennzeichnet, daß die eingesetzten Lösungsmittel ausgewählt sind aus der Gruppe: N,N-Dimethylacetamid, N,N-Dimethylformamid, N-Methyl-pyrrolidon-2, Dimethylsulfoxid, 1,1,3,3-Tetramethylharnstoff, 1,3-Dimethylharnstoff, 1,3-Dimethyl-imidazolidon-2, 1,3-Dimethyl-3,4,5,6-tetrahydropyrimidon-2 und einem Gemisch dieser Lösungsmittel.

## Claims

**1.** Process for the preparation of copoly(imide-amide) containing diorganopolysiloxane groups, characterised in that the following reactants (i), (2i) and (3i) are reacted directly, by operating at a temperature of between 50°C and 210°C and in the presence of an organic solvent or of a mixture of organic solvents:

- (i) is a diisocyanate of the formula:

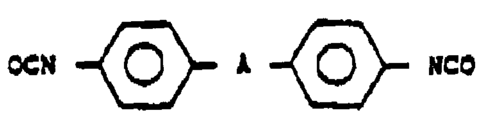 (I)

in which the symbol A denotes a single valency bond or a group:

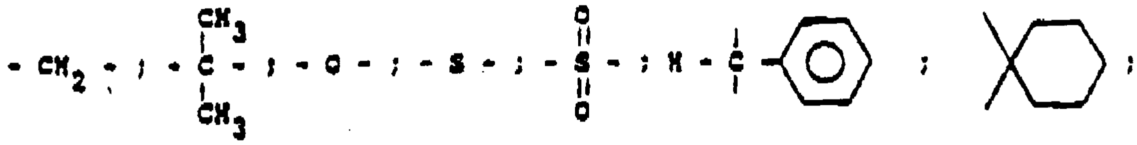

- (2i) is a monoanhydride of a tricarboxylic acid of formula:

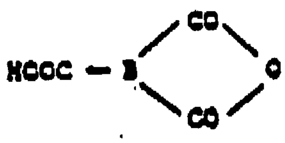

(II)

in which B denotes a trivalent radical consisting of a substituted or unsubstituted aromatic radical or of two of these radicals joined together by a single valency bond or a group:

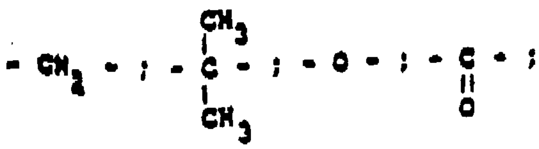

- and (3i) is a diisocyanate containing a diorganopolysiloxane group of formula:

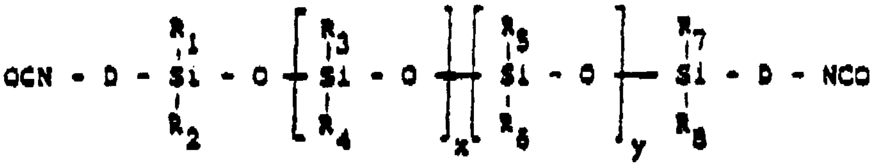

(III)

in which:

D denotes a divalent radical which has the formula:

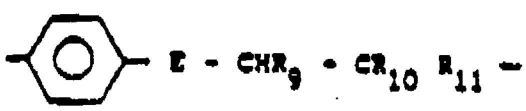

(IV)

in which: it is the benzene ring which is always linked to the isocyanate function group NCO; the symbol E denotes a single valency bond, a diorganosilyl group of formula:

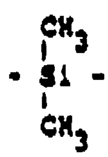 , 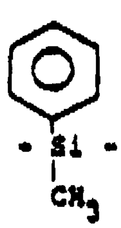 or 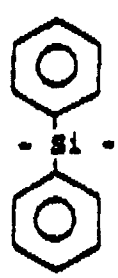

or a divalent group consisting of an alkylene radical containing from 1 to 6 carbon atoms which is linked on one side to the benzene ring by a single valency bond, an oxygen atom, a sulphur atom, an ester

functional group or an amide functional group, and, on the other side, to the group $CHR_9$-$CR_{10}R_{11}$ by a single valency bond or by a diorganosilyl group of formula:

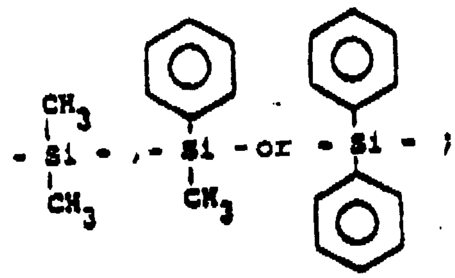

, or ;

each of the symbols $R_9$, $R_{10}$ and $R_{11}$, which are identical or different, denotes a hydrogen atom or a linear or branched alkyl radical containing from 1 to 6 carbon atoms;

each of $R_1$, $R_2$, $R_3$, $R_4$, $R_5$, $R_5$, $R_7$ and $R_5$, which are identical or different, denotes a monovalent hydrocarbon radical chosen from: linear or branched alkyl radicals containing from 1 to 12 carbon atoms, it being possible for these radicals to be substituted by one or more chlorine, bromine, or fluorine atoms or by a -CN group; a phenyl radical optionally substituted by one or more alkyl and/or alkoxy radicals containing from 1 to 4 carbon atoms or by one or more chlorine atoms;

the symbols x and y denote numbers, which are identical or different, whole or fractional, whose sum lies in the range from 0 to 100;

- the respective proportions of reactants (i) and (2i) being chosen so that the ratio r:

number of moles of anhydride (2i)/number of moles of diisocyanate (i)

lies in the range from 1.01/1 to 3/1;

- and the proportion of the reactant (3i) being chosen so that the ratio r′:

number of moles of siloxane diisocyanate (3i)/(number of moles of anhydride (2i) - number of moles of diisocyanate (i))

is equal to 1.

2. Process according to Claim 1, characterised in that the diisocyanate (i) of formula (I) is chosen from the group consisting of:
   - 4,4′-diisocyanato-2,2-diphenylpropane,
   - 4,4′-diisocyanatodiphenylmethane,
   - 4,4′-diisocyanatobiphenyl,
   - 4,4′-diisocyanatodiphenyl sulphide,
   - 4,4′-diisocyanatodiphenyl sulphone,
   - 4,4′-diisocyanatodiphenyl ether, and
   - 4,4′-diisocyanato-1,1-diphenylcyclohexane.

3. Process according to either of Claims 1 and 2, characterised in that the monoanhydride of tricarboxylic acid (2i) of formula (II) is chosen from the group consisting of:
   - the monoanhydride of trimellitic acid,
   - the 2,3-monoanhydride of 2,3,6-naphthalenetricarboxylic acid,
   - the 1,8-monoanhydride of 1,8,4-naphthalenetricarboxylic acid,
   - the 1,2-monoanhydride of 1,2,5-naphthalenetricarboxylic acid,
   - the 3,4-monoanhydride of 3,4,4′-diphenyltricarboxylic acid,
   - the 3,4-monoanhydride of diphenyl ether 3,4,4′-tricarboxylic acid,
   - the 3,4-monoanhydride of 3,4,4′benzophenonetricarboxylic acid, and
   - the 3,4-monoanhydride of 3,4,3′-diphenylisopropylidene-tricarboxylic acid.

4. Process according to any one of Claims 1 to 3, characterised in that the siloxane diisocyanates (3i) of formula (III) employed are those where the diorganopolysiloxane group contains both Si-alkyl (or Si-substituted alkyl) bonds and Si-phenyl (or Si-substituted phenyl) bonds.

5. Process according to Claim 4, characterised in that the siloxane diisocyanates (3i) used are those corresponding to the formula (III) in which:

2.

D = 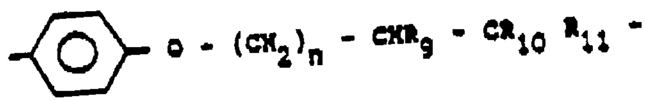

or

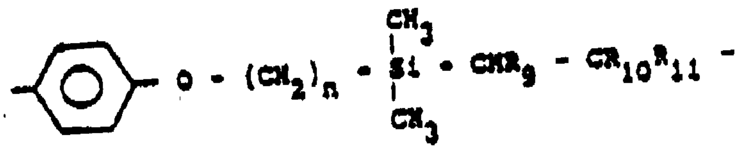

with n = 1,2 or 3 and $R_9 = R_{10} = R_{11}$ = a hydrogen atom or a linear alkyl radical containing from 1 to 3 carbon atoms; $R_1 = R_2 = R_3 = R_4 = R_7 = R_8$ = linear alkyl radical containing from 1 to 3 carbon atoms; $R_5 = R_8$ = phenyl radical; x + y lies in the range from 0 to 100 and, prefereably, from 4 to 70;

3. D has the meaning given above in paragraph 2; $R_1 = R_2 = R_7 = R_8$ = linear alkyl radical containing from 1 to 3 carbon atoms; $R_3 = R_4 = R_8 = R_8$ = phenyl radical; x + y lies in the range from 0 to 100 and, preferably, from 4 to 70;

4. D has the meaning given above in paragraph 2; $R_1 = R_2 = R_3 = R_5 = R_7 = R_8$ = linear alkyl radical containing from 1 to 3 carbon atoms; $R_4 = R_8$ = phenyl radical; x = y lies in the range from 0 to 100 and, preferably, from 4 to 70;

5. D has the meaning given above in paragraph 2; $R_1 = R_3 = R_8 = R_7$ = linear alkyl radical containing from 1 to 3 carbon atoms; $R_2 = R_4 = R_8 = R_8$ = phenyl radical; x + y lies in the range from 0 to 100 and, preferably, from 4 to 70.

**6.** Preparative process according to any one of Claims 1 to 5, characterised in that the starting reactants (i), (2i) and (3i), which are used together, are dissolved in an organic solvent or a mixture of organic solvents, the operation being performed at ambient temperature from 20°C to 30°C, and the temperature of the solution obtained is then raised to the desired reaction temperature of between 50°C and 210°C, either directly or gradually, the operation being carried out at atmospheric pressure over a period which will vary to a large extent as a function of the precise temperature conditions adopted.

**7.** Preparative process according to any one of Claims 1 to 6, characterised in that the solvents used are taken from the group consisting of: N,N-dimethylacetamide, N,N-dimethylformamide, N-methyl-2-pyrrolidone, dimethyl sulphoxide, 1,1,3,3-tetramethylurea, 1,3-dimethylurea, 1,3-dimethyl-2-imidazolidone, 1,3-dimethyl-3,4,5,6-tetrahydro-2-pyrimidone and a mixture of these solvents.